# EUROPÄISCHE PATENTANMELDUNG

(11) **EP 3 324 228 A1**
(43) Veröffentlichungstag der Anmeldung: **23.05.2018**
(21) Anmeldenummer: 17201414.4
(22) Anmeldetag: 13.11.2017
(51) Int. Cl.: G02B 6/38

(54) **FERRULE UND VERFAHREN ZUR HERSTELLUNG**

(30) Priorität: 16.11.2016 DE 102016122022
(71) Anmelder: Euromicron Werkzeuge GmbH, 35764 Sinn-Fleisbach (DE)
(72) Erfinder: WERNER, Christoph, 35649 Bischoffen (DE)
(74) Vertreter: advotec.

(57) **Zusammenfassung**

Die Erfindung betrifft eine Ferrule (10) für einen Steckverbinder zur lösbaren Verbindung von Lichtwellenleitern sowie ein Verfahren zur Herstellung einer derartigen Ferrule, wobei die Ferrule zur Aufnahme eines Faserendes einer optischen Faser eines Lichtwellenleiters mit einer Durchgangsbohrung (12) ausgebildet ist, wobei die Ferrule aus einem Metall ausgebildet ist, wobei die Ferrule zumindest teilweise mit einer amorphen Kohlenstoffschicht (22) beschichtet ist.

## Beschreibung

Die Erfindung betrifft eine Ferrule für einen Steckverbinder zur lösbaren Verbindung von Lichtwellenleitern sowie ein Verfahren zu deren Herstellung, wobei die Ferrule zur Aufnahme eines Faserendes einer optischen Faser eines Lichtwellenleiters mit einer Durchgangsbohrung ausgebildet ist, und wobei die Ferrule aus einem Metall ausgebildet ist.

Steckverbinder zur lösbaren Verbindung von Lichtwellenleitern bzw. Glasfaserkabeln werden zur Ausbildung einer Stecker-Stecker-Verbindung oder auch einer Stecker-Buchse-Verbindung verwendet. Die Steckverbinder sollen dabei eine möglichst geringe Signaldämpfung und eine hohe Rückflussdämpfung aufweisen. Die bekannten Steckverbinder sind im Wesentlichen aus einem Steckergehäuse und zumindest einer Ferrule ausgebildet, wobei die Ferrule zur Aufnahme eines Faserendes einer optischen Faser eines Lichtwellenleiters dient. Weiter kann die Ferrule auch so ausgebildet sein, dass der Lichtwellenleiter selbst bzw. ein Mantel des Lichtwellenleiters an der Ferrule, beispielsweise mittels Crimpen, Spannzange oder Kleben, fest fixiert werden kann. Die Ferrule weist eine Durchgangsbohrung auf, in die das Faserende des Lichtwellenleiters eingesetzt und gegenüber einem Faserende eines gegenüberliegenden Steckverbinders oder einer Buchse positioniert wird. Daher wird eine möglichst koaxiale Anordnung der Durchgangsbohrung bzw. des Faserendes in der Ferrule angestrebt, so dass die Ferrule besonders hohen Genauigkeitsanforderungen genügen muss.

Weiter ist es bekannt, die Ferrule aus einem keramischen oder einem metallischen Werkstoff herzustellen. Der Werkstoff sollte hinsichtlich seiner Eigenschaften eine Ausführung einer Anzahl von Verbindungszyklen des Steckverbinders ermöglichen, ohne dass eine Qualität der Steckverbindung nachteilig beeinflusst wird. Weiter entsteht bei einer Steckverbindung mit aneinander gegenüberliegenden Faserenden bzw. Endflächen der jeweiligen Ferrulen Wärme infolge von Reflektionen von Licht im Bereich der Faserenden. Das Material der Ferrule muss daher so beschaffen sein, dass diese Wärmelast so weit in die Ferrule bzw. in den Steckverbinder abgeleitet wird, dass die Ferrule an der Endfläche nicht durch beispielsweise einen Abbrand von Material beschädigt wird. Der betreffende Steckverbinder begrenzt somit auch eine mögliche energetische Übertragungsleistung bzw. eine übertragbare Lichtmenge der Steckverbindung. Beispielsweise aus keramischem Material ausgebildete Ferrulen sind hier aufgrund einer gegenüber Metall vergleichsweise hohen Abriebfestigkeit und Temperaturstabilität vorteilhaft. Diese Ferrulen sind jedoch nur bei einer Massenfertigung von Steckverbindern wirtschaftlich herzustellen; kleinere Stückzahlen sind in der Herstellung vergleichsweise teuer, was insbesondere nachteilig ist.

Aus Metall bestehende Ferrulen sind mittels spanender Bearbeitungsverfahren kostengünstig herzustellen. Dabei werden als Werkstoffe beispielsweise Edelstahl oder eine Nickellegierung verwendet, da diese Werkstoffe kostengünstig erhältlich und gut spanend bearbeitbar sind. Weiter weisen diese Werkstoffe eine durchschnittliche Wärmeleitfähigkeit auf und sind weitgehend beständig gegenüber Umwelteinflüssen, wie beispielsweise einer Oxidation bzw. Korrosion einer Oberfläche. Metallische Werkstoffe mit einer vergleichsweise hohen Wärmeleitfähigkeit zeigen hingegen schnell eine Oxidation bzw. Korrosion einer Oberfläche, wie beispielsweise Kupfer, oder sind vergleichsweise teuer, wie beispielsweise Silber, und somit für eine Herstellung in großen Stückzahlen ungeeignet.

Der vorliegenden Erfindung liegt daher die Aufgabe zugrunde, eine Ferrule für einen Steckverbinder und ein Verfahren zu deren Herstellung vorzuschlagen, die bzw. das die Übertragung einer großen Lichtmenge bei gleichzeitig geringen Herstellungskosten der Ferrule ermöglicht.

Diese Aufgabe wird durch eine Ferrule mit den Merkmalen des Anspruchs 1, einen Steckverbinder mit den Merkmalen des Anspruchs 13, eine Lichtwellenleiterkonfiguration mit den Merkmalen des Anspruchs 14 und ein Verfahren mit den Merkmalen des Anspruchs 15 gelöst.

Die erfindungsgemäße Ferrule für einen Steckverbinder zur lösbaren Verbindung von Lichtwellenleitern ist zur Aufnahme eines Faserendes einer optischen Faser eines Lichtwellenleiters mit einer Durchgangsbohrung ausgebildet, wobei die Ferrule aus einem Metall ausgebildet ist, wobei die Ferrule zumindest teilweise mit einer amorphen Kohlenstoffschicht beschichtet ist.

Die Schicht aus amorphem Kohlenstoff auf der Ferrule, die auch als Hülse bezeichnet werden kann, bewirkt, dass die Ferrule eine glatte Oberfläche mit einer hohen Abriebfestigkeit aufweist und insbesondere vor Oxidation bzw. Korrosion geschützt ist. Weiter weist die Beschichtung eine Härte von ca. 2500 bis 3000 HV auf. Darüber hinaus hat die Beschichtung eine schwarze Farbe, so dass eventuelle Beschädigungen der Beschichtung leicht erkannt werden können. Besonders vorteilhaft ist, dass die amorphe Kohlenstoffschicht vom Ultravioletten bis ins ferne Infrarot (> 800 nm) optisch transparent ist und eine sehr hohe Wärmeleitfähigkeit aufweist. Dadurch, dass die Ferrule bzw. deren Oberfläche mit der amorphen Kohlenstoffschicht beschichtet ist, wird es erst möglich ein Metall zur Ausbildung der Ferrule zu verwenden, welches ebenfalls eine besonders hohe Wärmeleitfähigkeit aufweist und gleichzeitig kostengünstig ist, jedoch sonst aufgrund anderer Materialeigenschaften, wie beispielsweise einer vergleichsweise geringen Korrosionsbeständigkeit, ungeeignet wäre. Die dann höhere Wärmeleitfähigkeit des Metalls der Ferrule ermöglicht eine Übertragung einer höheren Leistung bzw. größeren Lichtmenge über den Steckverbinder, ohne dass es zu einer Beschädigung der Ferrule bzw. einer Endfläche der Ferrule kommt. Auch wird die Ableitung von Wärmeenergie durch die Wärmeleitfähigkeit und optische Transparenz der amorphen Kohlenstoffschicht vorteilhaft unterstützt.

Das Metall der Ferrule kann eine Wärmeleitfähigkeit von ≥240 W/(mK), vorzugsweise von ≥400 W/(mK), aufweisen.

Die Ferrule kann dann auch aus Kupfer oder einer Kupferlegierung ausgebildet sein. Alternativ kann die Ferrule auch aus einem anderen Metall oder einer anderen geeigneten Metalllegierung ausgebildet sein, die eine vergleichsweise verbesserte Wärmeleitfähigkeit aufweist. Insbesondere Kupfer bzw. eine Kupferlegierung ist besonders kostengünstig als Halbzeug erhältlich und gut spanend bearbeitbar. Die sonst nachteilige Eigenschaft des Kupfers, schnell an seiner Oberfläche eine Oxidationsschicht auszubilden, ist durch die Beschichtung mit dem amorphen Kohlenstoff nicht mehr von Bedeutung.

Die amorphe Kohlenstoffschicht kann mit einem DLC-Beschichtungsverfahren (Diamond-Like-Carbon) aufgebracht sein. Mit einem derartigen Verfahren kann ein diamantähnlicher Kohlenstoff auf einer Oberfläche der Ferrule aufgebracht werden. Eine derartige Beschichtung ist bis 400 °oder auch C 600 °C temperaturstabil, so dass ein Abbrand im Bereich der Ferrule am Faserende wirkungsvoll verhindert werden kann. Weiter kann eine besonders glatte Oberfläche durch die Beschichtung erhalten werden, wodurch ein Anhaften von Verunreinigungen an der Ferrule vermieden werden kann.

Vorteilhaft kann eine Oberfläche der Ferrule vollständig beschichtet sein. So kann sichergestellt werden, dass die Ferrule allseitig an ihrer Oberfläche geschützt ist.

Alternativ kann eine einer optischen Faser zugewandte innere Oberfläche der Ferrule unbeschichtet sein. Folglich kann somit zumindest eine einer optischen Faser abgewandte äußere Oberfläche der Ferrule in jedem Fall beschichtet sein. Wenn ein Lichtwellenleiter in die Ferrule eingesteckt bzw. an dieser befestigt wird, wird die innere Oberfläche dann durch den Lichtwellenleiter abgedeckt bzw. nach außen abgeschlossen, so dass eine Beschichtung hier nicht zwingend erforderlich ist. Somit kann zumindest eine nicht von der optischen Faser abgedeckte Oberfläche der Ferrule in jedem Fall beschichtet sein. Weiter wird es dann auch möglich, die Ferrule besonders einfach zu beschichten, indem die Ferrule bei einem Beschichtungsvorgang auf einen Positionierstift einer Trägervorrichtung aufgesteckt werden kann. Der Positionierstift verhindert dann eine Beschichtung der inneren Oberfläche der Ferrule.

Die Ferrule kann mit einer Kohlenstoffschicht von maximal 5µm, bevorzugt maximal 3µm Dicke, besonders bevorzugt maximal 1,5µm ± 0,5µm, beschichtet sein. Eine Kohlenstoffschicht dieser Dicke ist ausreichend fest und widerstandsfähig gegenüber eventuellen Beschädigungen bei einer Handhabung. Weiter kann die Schichtdicke unabhängig von einer Oberflächenkontur ausgebildet werden. Darüber hinaus ist es möglich, bei einer spanenden Bearbeitung der Ferrule die Dicke der Kohlenstoffschicht bereits zu berücksichtigen.

Die Ferrule kann mit einer wasserstofffreien amorphen Kohlenstoffschicht, mit einer tetraedrischen wasserstofffreien amorphen Kohlenstoffschicht, mit einer metallhaltigen wasserstofffreien amorphen Kohlenstoffschicht, mit einer wasserstoffhaltigen amorphen Kohlenstoffschicht mit einem Wasserstoffanteil von >35%, mit einer tetraedrischen wasserstoffhaltigen amorphen Kohlenstoffschicht mit einem Wasserstoffanteil von >25%, mit einer metallhaltigen wasserstoffhaltigen amorphen Kohlenstoffschicht oder mit einer modifizierten, mit zumindest einem der Elemente Si, O, N, F und/oder B dotierten wasserstoffhaltigen amorphen Kohlenstoffschicht beschichtet sein. Derartige Kohlenstoffschichten sind aufgrund ihrer Bindungsstruktur im Wesentlichen einer Diamantschicht gleichzusetzen. Auch kann eine Kohlenstoffschicht ausgebildet werden, die eine besonders hohe Verschleißfestigkeit und einen geringen Reibkoeffizienten aufweist. Eine Dotierung der amorphen Kohlenstoffschicht mit zumindest einem der Elemente Silicium, Sauerstoff, Stickstoff, Fluor und Bor ermöglicht eine wesentliche Beeinflussung der Eigenschaften der Kohlenstoffschicht. Beispielsweise kann mittels Silicium eine Temperaturbeständigkeit in sauerstoffhaltiger Umgebung erhöht werden.

Die Ferrule kann im Wesentlichen rotationssymmetrisch ausgebildet sein, wobei die Durchgangsbohrung an einem Steckerende der Ferrule eine Aufnahmebohrung zur Positionierung der optischen Fasern relativ zu einer Längsachse der Ferrule aufweisen kann. Unter dem Steckerende wird das Ende der Ferrule verstanden, das das Faserende haltert und relativ zu einem weiteren Steckerende einer gegenüberliegenden Ferrule positioniert. Prinzipiell kann die Ferrule auch einen rechteckigen oder quadratischen Querschnitt aufweisen, wobei dann ebenfalls eine Durchgangsbohrung ausgebildet ist. Weiter ist es auch möglich, eine Mehrzahl von Durchgangsbohrungen in der Ferrule zur Positionierung von jeweils Faserenden vorzusehen. Die Aufnahmebohrung weist vorzugsweise einen Durchmesser auf, der im Wesentlichen einem Durchmesser der optischen Faser an dem Faserende entspricht. Das Faserende kann dann einfach in die Aufnahmebohrung eingesteckt werden. Auch kann vorgesehen sein, dass die Aufnahmebohrung hinsichtlich des Durchmessers an ein Kleben des Faserendes in der Aufnahmebohrung angepasst ist.

Die Aufnahmebohrung kann mit einem Lageversatz in radialer Richtung relativ zur einem Außendurchmesser der Ferrule an dem Steckerende von maximal 15µm, bevorzugt maximal 10µm, besonders bevorzugt maximal 5µm, ausgebildet sein. Eine Exzentrizität der Aufnahmebohrung relativ zum Außendurchmesser ist dann zumindest nicht so groß, dass eine Qualität einer Signalübertragung zwischen zwei Steckverbindern besonders negativ beeinflusst wird. Der Außendurchmesser kann dann mit einer Toleranz von maximal 10µm, bevorzugt maximal 14µm, besonders bevorzugt maximal 2µm, ausgebildet sein.

An dem Steckerende kann ein Kegelstumpf, eine kegelige Vertiefung oder eine plane Fläche mit einer Endfläche zur bündigen Anordnung des Faserendes ausgebildet sein. Der Kegelstumpf, die kegelige Vertiefung oder die plane Fläche kann seinerseits bzw. ihrerseits von einer ringförmigen Wandung umgeben sein, die einen Außendurchmesser der Ferrule ausbilden kann. Die kegelige Vertiefung kann durch eine Spitze eines Bohrers bzw. die plane Fläche durch einen Fräser oder Senker mit planer Stirnfläche einfach ausgebildet werden.

Die Durchgangsbohrung kann an einem Befestigungsende der Ferrule eine Befestigungsbohrung zur Aufnahme und/oder Befestigung eines Mantels des Lichtwellenleiters relativ zu einer Längsachse der Ferrule aufweisen. Unter einem Befestigungsende wird ein Ende der Ferrule verstanden, an dem die optische Faser in die Ferrule hineinverlaufend angeordnet ist. Die Befestigungsbohrung kann folglich um ein Vielfaches größer ausgebildet sein als ein Durchmesser der optischen Faser, so dass ein Mantel oder eine Mantelschicht des Lichtwellenleiters in die Befestigungsbohrung hineingesteckt werden kann. Dadurch wird es möglich, den Lichtwellenleiter mittels beispielsweise einer Kleberverbindung, Spannzange oder Crimpen mit der Ferrule fest zu verbinden.

Der erfindungsgemäße Steckverbinder zur lösbaren Verbindung von Lichtwellenleitern weist zumindest eine erfindungsgemäße Ferrule auf. Weiter kann der Steckverbinder auch ein Steckergehäuse aufweisen. Vorteilhafte Ausführungsformen des Steckverbinders ergeben sich aus den Merkmalsbeschreibungen der auf den Vorrichtungsanspruch 1 rückbezogenen Unteransprüche.

Die erfindungsgemäße Lichtwellenleiterkonfiguration umfasst einen Lichtwellenleiter und einen daran befestigten, erfindungsgemäßen Steckverbinder. An den jeweiligen Enden des Lichtwellenleiters kann jeweils ein Steckverbinder befestigt sein. Der Lichtwellenleiter kann eine Multimodefaser oder eine Monomodefaser aufweisen.

Bei dem erfindungsgemäßen Verfahren zur Herstellung einer Ferrule für einen Steckverbinder zur lösbaren Verbindung von Lichtwellenleitern wird die Ferrule zur Aufnahme eines Faserendes einer optischen Faser eines Lichtwellenleiters mit einer Durchgangsbohrung ausgebildet, wobei die Ferrule aus einem Metall ausgebildet wird, wobei die Ferrule zumindest teilweise mit einer amorphen Kohlenstoffschicht beschichtet wird. Hinsichtlich der Vorteile des erfindungsgemäßen Verfahrens wird auf die Vorteilsbeschreibung der erfindungsgemäßen Vorrichtung verwiesen.

Die Ferrule kann an einem Befestigungsende der Ferrule mit der Durchgangsbohrung auf einen Positionierstift einer Trägervorrichtung aufgesteckt werden, wobei mittels des Positionierstiftes eine innere Oberfläche der Durchgangsbohrung abgedeckt und die Ferrule gehaltert werden kann, wobei nachfolgend die Ferrule mit einer amorphen Kohlenstoffschicht beschichtet werden kann. Die Trägervorrichtung kann beispielsweise eine Vielzahl von Positionierstiften aufweisen, die eine Aufnahme von ebenfalls einer Vielzahl von Ferrulen ermöglicht. Die Trägervorrichtung kann dann zusammen mit den Ferrulen einfach gehandhabt und in einer Prozesskammer zur Beschichtung mit der amorphen Kohlenstoffschicht angeordnet werden. Dadurch, dass die innere Oberfläche der Durchgangsbohrung durch den Positionierstift abgedeckt werden kann, kann verhindert werden, dass die innere Oberfläche mit der amorphen Kohlenstoffschicht beschichtet wird. Gleichzeitig wird es möglich, die Ferrule so zu haltern, dass eine äußere Oberfläche der Ferrule mit der amorphen Kohlenstoffschicht in der gewünschten Weise beschichtet wird. Prinzipiell ist es auch möglich, ausgewählte Bereiche der äußeren Oberfläche der Ferrule nach Bedarf abzudecken und folglich nicht zu beschichten. Durch die Anordnung einer großen Anzahl von Ferrulen in einer Prozesskammer wird ein Beschichtungsvorgang besonders kostengünstig durchführbar. Eventuelle Mehrkosten durch den Beschichtungsvorgang als zusätzlichen Arbeitsschritt bei der Herstellung der Ferrule können durch Minderkosten bei einer Materialauswahl oder durch eine vorteilhaft verlängerte Lebensdauer und/oder verbesserte Leistungsübertragung eines Steckverbinders aufgewogen werden.

Weitere vorteilhafte Ausführungsformen des Verfahrens ergeben sich aus den Merkmalsbeschreibungen der auf den Vorrichtungsanspruch 1 zurückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: eine schematische Darstellung einer ersten Ausführungsform einer Ferrule in einer Längsschnittansicht;
- **Fig. 2**: eine schematische Darstellung einer zweiten Ausführungsform einer Ferrule in einer Längsschnittansicht.

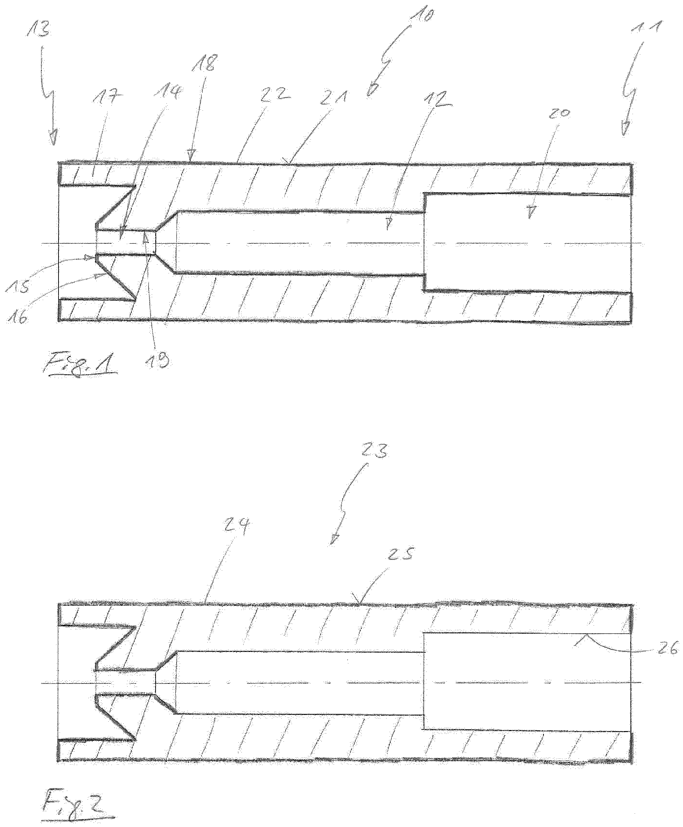

Die **Fig. 1** zeigt eine stark vereinfachte, schematische Darstellung einer Ferrule 10 in einer Längsschnittansicht. Die Ferrule 10 dient zur Ausbildung eines hier nicht näher dargestellten Steckverbinders zur lösbaren Verbindung von Lichtwellenleitern. Ein hier ebenfalls nicht dargestelltes Faserende einer optischen Faser eines Lichtwellenleiters kann von einem Befestigungsende 11 der Ferrule 10 in eine Durchgangsbohrung 12 der Ferrule 10 eingeführt werden. An einem Steckerende 13 der Ferrule 10 weist die Durchgangsbohrung 12 eine Aufnahmebohrung 14 zur Aufnahme bzw. Positionierung der optischen Faser bzw. dem Faserende auf. Nach einer Montage des Steckverbinders mit dem Lichtwellenleiter schließt das Faserende dann bündig an einer Endfläche 15 eines an dem Steckerende 13 ausgebildeten Kegelstumpfes 16 der Ferrule 10 ab. An dem Steckerende 13 ist der Kegelstumpf 16 von einer Ringwandung 17 der Ferrule 10 umgeben. Die Aufnahmebohrung 14 ist relativ zu einem Außendurchmesser 18 der Ferrule 10 mit einem maximalen Lageversatz in radialer Richtung von maximal 15µm, bevorzugt maximal 10µm, besonders bevorzugt maximal 5µm, ausgebildet. Die Aufnahmebohrung 14 kann einen Innendurchmesser 19 entsprechend einem Außendurchmesser der optischen Faser von im Wesentlichen 50µm bis 1050µm, vorzugsweise 125µm bis 500µm, aufweisen. Die Durchgangsbohrung 12 weist an dem Befestigungsende 11 zumindest eine Befestigungsbohrung 20 zur Aufnahme eines Mantels oder einer Mantelschicht des Lichtwellenleiters auf.

Die Ferrule 10 ist einstückig aus Metall ausgebildet, wobei das Metall vorzugsweise Kupfer oder eine Kupferlegierung ist. Eine Oberfläche 21 der Ferrule 10 ist hier vollständig mit einer amorphen Kohlenstoffschicht 22, welche vorzugsweise mittels eines DLC-Beschichtungsverfahrens aufgebracht sein kann, ausgebildet.

Die **Fig. 2** zeigt eine Ferrule 23, die im Unterschied zur Ferrule aus **Fig. 1** eine nur teilweise mit einer amorphen Kohlenstoffschicht 24 beschichtete Oberfläche 25 aufweist. Eine innere Oberfläche 26 der Oberfläche 25 bzw. der Ferrule 23 ist hier zumindest teilweise unbeschichtet.

## Patentansprüche

1. Ferrule (10, 23) für einen Steckverbinder zur lösbaren Verbindung von Lichtwellenleitern, wobei die Ferrule zur Aufnahme eines Faserendes einer optischen Faser eines Lichtwellenleiters mit einer Durchgansbohrung (12) ausgebildet ist, wobei die Ferrule aus einem Metall ausgebildet ist,
**dadurch gekennzeichnet,**
**dass** die Ferrule zumindest teilweise mit einer amorphen Kohlenstoffschicht (22, 24) beschichtet ist.

2. Ferrule nach Anspruch 1,
**dadurch gekennzeichnet,**
**dass** das Metall der Ferrule (10, 23) eine Wärmeleitfähigkeit von ≥ 240 W/(mK), vorzugsweise von ≥ 400 W/(mK), aufweist.

3. Ferrule nach Anspruch 1 oder 2,
**dadurch gekennzeichnet,**
**dass** die Ferrule (10, 23) aus Kupfer oder einer Kupferlegierung ausgebildet ist.

4. Ferrule nach einem der vorangehenden Ansprüche,
**dadurch gekennzeichnet,**
**dass** die amorphe Kohlenstoffschicht (22, 24) mit einem DLC-Beschichtungsverfahren aufgebracht ist.

5. Ferrule nach einem der vorangehenden Ansprüche,
**dadurch gekennzeichnet,**
**dass** eine Oberfläche (21) der Ferrule (10) vollständig beschichtet ist.

6. Ferrule nach einem der Ansprüche 1 bis 4,
**dadurch gekennzeichnet,**
**dass** eine einer optischen Faser zugewandte innere Oberfläche (26) der Ferrule (23) unbeschichtet ist.

7. Ferrule nach einem der vorangehenden Ansprüche,
**dadurch gekennzeichnet,**
**dass** die Ferrule (10, 23) mit einer Kohlenstoffschicht (22, 24) von maximal 5µm, bevorzugt maximal 3µm Dicke, besonders bevorzugt maximal 1,5µm ± 0,5µm, beschichtet ist.

8. Ferrule nach einem der vorangehenden Ansprüche,
**dadurch gekennzeichnet,**
**dass** die Ferrule (10, 23) mit einer wasserstofffreien amorphen Kohlenstoffschicht, mit einer tetraedrischen wasserstofffreien amorphen Kohlenstoffschicht, mit einer metallhaltigen wasserstofffreien amorphen Kohlenstoffschicht, mit einer wasserstoffhaltigen amorphen Kohlenstoffschicht mit einem Wasserstoffanteil von > 35 %, mit einer tetraedrischen wasserstoffhaltigen amorphen Kohlenstoffschicht mit einem Wasserstoffanteil von > 25 %, mit einer metallhaltigen wasserstoffhaltigen amorphen Kohlenstoffschicht oder mit einer modifizierten, mit zumindest einem der Elemente Si, O, N, F und/oder B dotierten, wasserstoffhaltigen amorphen Kohlenstoffschicht beschichtet ist.

9. Ferrule nach einem der vorangehenden Ansprüche,
**dadurch gekennzeichnet,**
**dass** die Ferrule (10, 23) rotationssymmetrisch ausgebildet ist, wobei die Durchgangsbohrung (12) an einem Steckerende (13) der Ferrule eine Aufnahmebohrung (14) zur Positionierung der optischen Faser aufweist.

10. Ferrule nach Anspruch 9,
**dadurch gekennzeichnet,**
**dass** die Aufnahmebohrung (14) mit einem Lageversatz in radialer Richtung relativ zu einem Außendurchmesser (18) der Ferrule (10, 23) an dem Steckerende (13) von maximal 15µm, bevorzugt maximal 10µm, besonders bevorzugt maximal 5µm, ausgebildet ist.

11. Ferrule nach Anspruch 9 oder 10,
**dadurch gekennzeichnet,**
**dass** an dem Steckerende (13) ein Kegelstupf (16), eine kegelige Vertiefung oder eine plane Fläche mit einer Endfläche (15) zur bündigen Anordnung des Faserendes ausgebildet ist.

12. Ferrule nach einem der vorangehenden Ansprüche,
**dadurch gekennzeichnet,**
**dass** die Durchgangsbohrung (12) an einem Befestigungsende (11) der Ferrule (10, 23) eine Befestigungsbohrung (20) zur Aufnahme und/oder Befestigung eines Mantels des Lichtwellenleiters aufweist.

13. Steckverbinder zur lösbaren Verbindung von Lichtwellenleitern,
**dadurch gekennzeichnet,**
**dass** der Steckverbinder eine Ferrule (10, 23) nach einem der vorangehenden Ansprüche aufweist.

14. Lichtwellenleiterkonfiguration, umfassend einen Lichtwellenleiter und einen daran befestigten Steckverbinder nach Anspruch 13.

15. Verfahren zur Herstellung einer Ferrule (10, 23) für einen Steckverbinder zur lösbaren Verbindung von Lichtwellenleitern, wobei die Ferrule zur Aufnahme eines Faserendes einer optischen Faser eines Lichtwellenleiters mit einer Durchgangsbohrung (12) ausgebildet wird, wobei die Ferrule aus einem Metall ausgebildet wird,
**dadurch gekennzeichnet,**
**dass** die Ferrule (22, 24) zumindest teilweise mit einer amorphen Kohlenstoffschicht beschichtet wird.

16. Verfahren nach Anspruch 15,
**dadurch gekennzeichnet,**
**dass** die Ferrule (10, 23) an einem Befestigungsende (11) der Ferrule mit der Durchgangsbohrung (12) auf einen Positionierstift einer Trägervorrichtung aufgesteckt wird, wobei mittels des Positionierstiftes eine innere Oberfläche (26) der Durchgansbohrung abgedeckt und die Ferrule gehaltert wird, wobei nachfolgend die Ferrule mit einer amorphen Kohlenstoffschicht (22, 24) beschichtet wird.
